# EUROPÄISCHE PATENTANMELDUNG

(11) **EP 3 120 704 A1**
(43) Veröffentlichungstag der Anmeldung: **25.01.2017**
(21) Anmeldenummer: 16180597.3
(22) Anmeldetag: 21.07.2016
(51) Int. Cl.: A21C 15/00, A21D 15/02, F25D 13/06

(54) **VERFAHREN ZUM ABKÜHLEN VON BACKWAREN NACH DEREN ENTNAHME AUS EINEM OFEN SOWIE KÜHLEINRICHTUNG ZUM ABKÜHLEN VON BACKWAREN NACH DEREN ENTNAHME AUS EINEM OFEN**

(30) Priorität: 21.07.2015 DE 102015111774; 11.09.2015 DE 102015115324
(71) Anmelder: Reichenbach, Albert, 58640 Iserlohn (DE)
(72) Erfinder: Reichenbach, Albert, 58640 Iserlohn (DE)
(74) Vertreter: Haverkamp, Jens

(57) **Zusammenfassung**

Ein Verfahren zum Abkühlen von Backwaren nach deren Entnahme aus einem Ofen auf eine Weiterverarbeitungstemperatur, umfasst folgende Schritte:
- Auskühlen der Backwaren auf eine obere Aerosol-Behandlungstemperatur mit einer Oberflächentemperatur zwischen 80°C und weniger als 100°C, an welches erste Auskühlen der Bac kwaren sich eine zweistufige Aerosol-Behandlung der Backwaren anschließt,
- wobei die erste Phase der Aerosol-Behandlung bei Erreichen der oberen Aerosol-Behandlungstemperatur beginnt, wenn sich die Backwaren in einem Bereich, in dem gegenüber der Umgebung durch Luftzufuhr ein Überdruck herrscht, befinden, in welcher Phase die Backwaren einem zugeführten wasserbasierten oder wässrigen und gegenüber den Backwaren kühleren Aerosol ausgesetzt werden, wodurch diese adiabatisch abgekühlt werden, wobei eine Wassersättigung durch das Aerosol in der Backwarenumgebung von weniger als 100% eingestellt wird und diese Aerosol-Behandlung bis zum Erreichen einer mittleren Aerosol-Behandlungstemperatur von weniger als 70°C und mehr als 50°C fortgesetzt wird , und
- bei Erreichen der mittleren Aerosolbehandlungstemperatur: Übergang in die zweite Phase der Aerosol-Behandlung bei fortgesetzter Aerosolzuführung, jedoch in einer durch Luftzufuhr bereitgestellten Umgebung mit einem gegenüber dem in der vorangegangenen Phase höheren Druck, wobei in dieser zweiten Abkühlphase ab einer Oberflächentemperatur der Backwaren von 65°C oder weniger keimfreie Luft zum Aufbau des Überdruckes zugeführt wird und die Backwaren in dieser zweiten Phase bis zum Erreichen einer unteren Restauskühlungstemperatur ausgekühlt werden.

Beschrieben ist des Weiteren eine Kühleinrichtung, insbesondere zum Durchführen dieses Verfahrens.

## Beschreibung

Die Erfindung betrifft ein Verfahren zum Abkühlen von Backwaren nach deren Entnahme aus einem Ofen auf eine Weiterverarbeitungstemperatur. Die Erfindung betrifft ferner eine Kühleinrichtung zum Abkühlen von Backwaren nach deren Entnahme aus einem Ofen, insbesondere zur Durchführung des vorgenannten Verfahrens.

Backwaren, wie beispielsweise Brote, Brötchen und dergleichen müssen, nachdem sie aus dem für das Backen vorgesehenen Ofen entnommen werden, auskühlen, bevor diese einer weiteren Bearbeitung zugeführt werden. Bei einer solchen nachfolgenden Bearbeitung kann es sich beispielsweise um das Schneiden von Brot oder das Verpacken der ausgekühlten Backwaren oder auch das Einfrieren derselben handeln. Bei dem Prozess des Herstellens von Backwaren ist der sich an das eigentliche Backen anschließende Auskühlprozess nicht unkritisch, vor allem, da dieser Temperaturbereiche durchläuft, in denen eine Rekontamination der Backwaren möglich ist. Unter einer Rekontamination sind diejenigen Prozesse zu verstehen, durch die eine solche Backware während der Auskühlung der Umgebungsluft ausgesetzt ist und sich in der Umgebungsluft befindliche mikrobielle Keime auf der Oberfläche des auskühlenden Backlings absetzen können. Die Auskühlgeschwindigkeit von aus einem Ofen entnommenen Backwaren ist abhängig von der Beschaffenheit der Backware, wobei ein Auskühlen von Backwaren mit großer Masse und einem relativ hohen spezifischen Gewicht bei Raumtemperatur entsprechend länger dauert. Bei Vollkornbrot ist bei einer Auskühlung in Raumtemperatur von einer Kerntemperatur von etwa 90°C auf eine Schneidtemperatur mit einer Kerntemperatur von etwa 24°C mit einer Au skühlzeit von etwa 8 Stunden zu rechnen. Bei großen Brotgewichten kann die kann die Kühldauer 12 - 24 Stunden oder länger betragen.

Der Auskühlprozess von Backwaren kann beschleunigt werden, wenn die Backwaren durch aktive Kälteerzeugung gekühlt werden. Dieses hat zwar zum Vorteil, dass die Zeitspanne, in der die Backwaren der Umgebungsluft ausgesetzt sind, verkürzt ist. Allerdings hat diese Maßnahme einen erhöhten Energieverbrauch zur Folge.

Zu berücksichtigen bei dem Auskühlprozess von aus einem Ofen entnommenen Backwaren ist auch, dass, je länger die Auskühlzeit beträgt, die Backwaren, die typischerweise nach Abschluss des Auskühlprozesses verpackt werden, entsprechend lange dem Einfluss der Umgebungsluft und damit der Gefahr einer mikrobiellen Rekontamination ausgesetzt sind. Besonders kritisch sind in diesem Zusammenhang die relativ warmen Temperaturen unterhalb von 60 °C bis 65 °C, mithin diejenigen Temperaturen, bei denen Keime nicht mehr temperaturbedingt absterben. Vielmehr unterstützt eine gewisse Wärme die Vermehrungsaktivität derartiger, sich unter Umständen auf der Oberfläche eines Backlings abgesetzter Keime. Somit hat auch das Auskühlen der aus einem Ofen entnommenen Backwaren Einfluss auf die Bemessung des Mindesthaltbarkeitsdatums aus mikrobiell-hygienischer Sicht.

Um bei einem Auskühlen der aus einem Ofen entnommenen Backwaren keinen zu großen Feuchtigkeitsverlust hinnehmen zu müssen, werden im Zusammenhang mit einem Einsatz von Kälteanlagen zur Beschleunigung eines Abkühlens der Backwaren Befeuchter eingesetzt. Eingesetzt werden zu diesem Zweck Dampfgeneratoren. Eine Luftbefeuchtung während der Auskühlphase durch Dampf vermag zwar einem zu hohen Feuchtigkeitsverlust in der Backware entgegenzuwirken. Jedoch ist darauf zu achten, dass sich keine Kondensate bilden, die die Backware sowohl physikalisch als auch hygienisch nachteilig beeinflussen können.

Zum Kühlen von einem Ofen entnommenen Backwaren werden bei Großbäckereien Kühltürme verwendet, wobei je Backlinie zwei Kühltürme vorgesehen sind. In einem Kühlturm werden die Backwaren von unten nach oben gefördert, während diese in den zweiten Kühlturm von oben nach unten in die Ebene des Backofens zu den weiteren Bearbeitungsstationen zurückgeführt werden. Erforderlich ist für den Kühlprozess, dass die Kühltürme eingehaust sind und in diesen eine möglichst keimfreie Atmosphäre vorhanden ist.

In WO 95/00028 A1 ist ein Verfahren zum Abkühlen und nachfolgendem Konfektionieren von Lebensmitteln beschrieben. Bei diesem Stand der Technik wird eine adiabatische Kühlung eingesetzt, um Energie einzusparen. Adiabatisch gekühlt wird bei diesem vorbekannten Verfahren die in einen Kühltunnel einzubringende Luft. Der Kühltunnel selbst ist in mehrere Sektionen unterteilt, in welche Zonen die einzubringende Kühlluft mit unterschiedlicher Temperatur und unterschiedlicher relativen Feuchte eingebracht wird. Vor dem Eintritt in ein solches Segment des Kühltunnels wird die einzubringende Kühlluft bzgl. ihrer Temperatur und ihres relativen Feuchtigkeitsgehaltes eingestellt. An dieser Stelle befindet sich ein Ultraschallbefeuchter, durch den kleine Wassertröpfchen generiert werden, die aufgrund des vorbeiströmenden Kühlluftstromes diesen adiabatisch kühlen. Die auf diese Weise eingestellte Kühlluft wird dann in das jeweilige Segment des Kühltunnels eingebracht. Aufgrund der adiabatischen Kühlung liegt die in das jeweilige Segment des Kühltunnels eingebrachte Kühlluft in Dampfform bzw. als "Trockenluft-Wasserdampf-Gemisch" vor.

Ausgehend von diesem diskutierten Stand der Technik liegt der Erfindung daher die Aufgabe zugrunde, ein Verfahren sowie eine Kühleinrichtung zum Abkühlen von Backwaren nach deren Entnahme aus einem Ofen vorzuschlagen, welches nicht nur mit einem reduzierten Energieeinsatz zu einer raschen Abkühlung der Backwaren führt, sondern mit dem zugleich auch die Gefahr einer Rekontamination reduziert, wenn nicht gar verhindert werden kann und mit dem die Abkühlbedingungen besser an die abzukühlenden Backwaren angepasst werden können..

Gelöst wird diese Aufgabe erfindungsgemäß durch ein Verfahren zum Abkühlen von Backwaren nach deren Entnahme aus einem Ofen, umfassend folgende Schritte:
- Auskühlen der Backwaren auf eine obere Aerosolbehandlungstemperatur mit einer Oberflächentemperatur zwischen 80 °C und weniger als 100 °C, an welches erste Auskühlen der Backwaren sich eine zweistufige Aerosol-Behandlung der Backwaren anschließt,
- wobei die erste Phase der Aerosol-Behandlung bei Erreichen der oberen Aerosol-Behandlungstemperatur beginnt, wenn sich die Backwaren in einem Bereich, in dem gegenüber der Umgebung durch Luftzufuhr ein Überdruck herrscht, befinden, in welcher Phase die Backwaren einem zugeführten wasserbasierten oder wässrigen und gegenüber den Backwaren kühleren Aerosol ausgesetzt werden, wodurch diese adiabatisch abgekühlt werden, wobei eine Wassersättigung durch das Aerosol in der Backwarenumgebung von weniger als 100% eingestellt wird und diese Aerosol-Behandlung bis zum Erreichen einer mittleren Aerosol-Behandlungstemperatur von weniger als 70°C und mehr als 50°C fortgesetzt wird und
- bei Erreichen der mittleren Aerosolbehandlungstemperatur: Übergang in die zweite Phase der Aerosol-Behandlung bei fortgesetzter Aerosolzuführung, jedoch in einer durch Luftzufuhr bereitgestellten Umgebung mit einem gegenüber dem in der vorangegangenen Phase höheren Druck, wobei in dieser zweiten Abkühlphase ab einer Oberflächentemperatur der Backwaren von 65 °C oder weniger keimfreie Luft zum Aufbau des Überdruckes zugeführt wird, und die Backwaren in dieser zweiten Phase bis zum Erreichen einer unteren Restauskühlungstemperatur ausgekühlt werden.

Bei diesem Verfahren werden die Backwaren nach einer ersten Auskühlphase, in der diese nach der Entnahme aus dem Ofen eine Kerntemperatur von ca. 100 °C oder etwas weniger aufweisen, unverzüglich einer zweiphasigen Aerosol-Behandlung unterworfen. Ein solches Aerosol besteht im Unterschied zu einem Dampf aus kleinsten Flüssigkeitströpfchen, etwa in der Größenordnung zwischen 0,001 und 0,005 mm oder kleiner. Vorzugsweise überschreitet die durchschnittliche Tröpfchengröße der Aerosoltröpfchen eine Größe von 0,004 mm nicht. Zur Behandlung der Backwaren wird man ein wasserbasiertes oder wässriges Aerosol verwenden, typischerweise destilliertes Wasser, um so Entkeimungs-, Enthärtungs- und Entsalzungs-Effekte zu erhalten. Die geringe Tröpfchengröße bedingt, dass diese bereits bei einer sehr geringen Luftströmung in Schwebe bleiben und als Folge der geringen Tröpfchengröße einen vergleichsweise hohen Wasserdampfdruck generieren können und sich mithin schwerkraftbedingt nicht, jedenfalls nicht in einem nennenswerten Maße absetzen. Die thermisch bedingte Auftriebskraft in Kühltunnelsystemen wirkt der Sinkkraft der Aerosoltröpfchen entgegen und sorgt gleichermaßen für eine allseitige Umströmungssituation. Aus diesem Grunde erfolgt die Aerosol-behandlung der Backwaren in einer Umgebung mit einem gewissen Überdruck. Bereitgestellt wird dieser durch eine Luftströmung, die zugleich zum Transport der Aerosoltröpfchen und zum Zuführen derselben an die Backwaren dient. Durch das den Backwaren zugeführte Aerosol werden die Backwaren adiabatisch gekühlt und nicht der Zuluftstrom, wie dieses beim Stand der Technik gemäß WO 95/00028 A1 der Fall ist. Die auf diese Weise bereitgestellte relative Luftfeuchtigkeit ist an die entsprechende Feuchtigkeit bzw. dem entsprechenden Wasserdampfpartialdruck der gebackenen Backware angepasst, so dass eine hohe Gleichgewichtsfeuchte resultiert mit der Folge, dass die Backware keinen oder nur einen nicht nennenswerten Gewichtsverlust in dieser Abkühlphase erleiden muss. Mit einem solchen Aerosol kann auch eine solche Luftfeuchte bereitgestellt werden, dass die gebackene Backware während dieser Abkühlphase an Gewicht zunimmt. Die Luftströmung und die Aerosolzufuhr sind unabhängig voneinander einstellbar, sodass über die zugeführte Luftmenge Einfluss auf den Druck in der Umgebung der Backwaren und über die mit dem Luftstrom zugeführten Aerosoltröpfchen Einfluss auf die relative Feuchtigkeit in der Backwarenumgebung genommen werden kann. Zudem ist typischerweise die Temperatur des Luftstroms beeinflussbar. Über diese Parameter kann die Umgebung der auskühlenden Backwaren in unterschiedlicher Weise beeinflusst werden, um die gewünschten Ergebnisse zu erhalten, wie beispielsweise einen bestimmten Feuchtigkeitsgehalt, eine bestimmte Krustenausbildung oder dergleichen. Diesem Zweck dient auch die Unterteilung des Kühlprozesses in zumindest zwei Phasen, um den Kühlprozess mit unterschiedlichen Parametern durchführen zu können. Einfluss nehmen können auch sich ändernde hygienische Bedingungen, auf die sodann in den unterschiedlichen Kühlphasen auf unterschiedliche Weise reagiert werden kann.

Aufgrund der durch die Aerosolumgebung an der Oberfläche der Backwaren verbesserten Wärmeleitfähigkeit ist bei diesem Verfahren zudem die Abkühlgeschwindigkeit reduziert.

Das Aerosol wird vorzugsweise in einer solchen Menge zugeführt, dass keine Wassersättigung erreicht ist. Gleichwohl wird man bestrebt sein, eine möglichst weitestgehende Wassersättigung in unmittelbarer Nähe der Backwaren durch die Aerosolzufuhr zu erzielen. Der Grad der Wassersättigung, der in der Backwarenumgebung durch die Aerosolzufuhr eingestellt wird, ist abhängig von der Backware. In aller Regel wird gewünscht sein, dass sich die Konsistenz der Backware nicht nachteilig verändert.

Eine spezifische Befeuchtung der Brotoberfläche mit Aerosol hat u.a. den Vorteil, dass ein nachfolgender Schneidevorgang problemloser verläuft, da spröde/splittrige Materialreaktionen der Kruste minimiert oder vermieden werden.

Sollte die Backware auf eine Aerosol-Behandlung hinsichtlich ihrer Konsistenz empfindlich reagieren, wird man eine geringere Wassersättigung durch die Aerosolzuführung einstellen. Auf der anderen Seite wird durch die Aerosol-Umgebung eine Feuchtigkeit aufgebaut, um dem Bestreben der Backwaren, bei der Kühlung Feuchtigkeit abzugeben, entgegenzuwirken. Ist der Feuchtigkeitsgehalt innerhalb der Backware und in der Backwarenumgebung, letzteres bereitgestellt durch die Aerosolzufuhr gleich, gibt die Backware während des Kühlvorganges keine Feuchtigkeit ab. Da die Wassersättigung in einfacher Weise durch die Aerosolzufuhr kontrolliert werden kann, ist es ohne Weiters möglich, in der Backwarenumgebung einen höheren Grad an Wassersättigung einzustellen mit der Folge, dass die Backware dann im Zuge des Kühlvorganges sogar Feuchtigkeit aufnimmt. Typisch sind Aerosol-Behandlungen, mit denen 50% bis 70% des Sättigungswertes in der Backwarenumgebung erreicht werden. Ebenfalls können höhere Sättigungswerte eingestellt werden, wenn gewünscht, jedoch sollten diese zur Vermeidung eines Risikos der Kondensatbildung etwa 98% nicht überschreiten.

Von besonderem Vorteil bei einem Einsatz eines Aerosols zur Bereitstellung der gewünschten Luftfeuchte in der Umgebung der Backwaren während dieser ersten Abkühlphase ist, dass hierdurch die Kühlung der Backwaren adiabatisch unterstützt wird, so dass ein Einsatz von aktiver Kälteerzeugung grundsätzlich nicht benötigt wird. Insofern werden bei diesem Verfahren die Backwaren durch die Aerosolzufuhr aktiv gekühlt. Zu diesem Zwecke wird das Aerosol mit einer Temperatur den Backwaren zugeführt, die gegenüber der Temperatur der abzukühlenden Backwaren relativ kühl ist. Typischerweise wird das Aerosol auf Umgebungstemperatur zugeführt, beispielsweise mit etwa 25 °C. Das Aeroso l kann auch niedrigere Temperaturen aufweisen, um die adiabatische Kühlung zu unterstützen, beispielsweise Temperaturen zwischen -4°C und 10°C. Dieser Aerosol-Behandlungsschritt beginnt bei einer Oberflächentemperatur der Backware unterhalb von 100°C als obere Aerosol-Behandlung stemperatur und endet bei einer mittleren Oberflächen-Behandlungstemperatur von weniger als 75°C, jedoch bei zumindest 60°C oder mehr. In dieser ersten Abkühlphase wird die Verdunstungskälte genutzt, wenn das kühle Aerosol in den Bereich der warmen Backware gelangt. Somit entspricht ein Abkühlen der Backwaren in der Aerosolumgebung einer aktiven Kühlung, jedoch ohne hierfür einen zusätzlichen Energieeinsatz zu benötigen. Energie wird allein für die Erzeugung des Aerosols benötigt, wobei dieses zum Bereitstellen der gewünschten Luftfeuchte in der Umgebung der Kühlung der Backwaren ohnehin erfolgt. In diesem Zusammenhang ist erwähnenswert, dass eine Generierung von Aerosol, wofür typischerweise Ultraschall-Generatoren, etwa piezokeramische Wandler eingesetzt werden, mit einem deutlich geringeren Energieeinsatz möglich ist als die Erzeugung von Wasserdampf mit einem Elektrobefeuchter. In aller Regel arbeiten diese mit einer Umkehrosmose. Eine Energiereduzierung von mehr als 35% kann hierdurch realisiert werden. Grundsätzlich können hierfür auch Hochdruckdüsen-Zerstäuber eingesetzt werden.

Durch die vorbeschriebene Aerosolbehandlung und die damit einhergehende Befeuchtung der abzukühlenden Backwaren wird die für das Abkühlen benötigte Zeit auch durch den dadurch begünstigten Wärmetransport reduziert. Zugleich wird die Kruste flexibilisiert, wodurch ein Abplatzen derselben von der Krume - das sogenannte Flaking - minimiert, wenn nicht gar gänzlich vermieden ist. Dieses gilt vor allem bei Tiefkühl- teilgebackenen Produkten.

Im Zuge der Auskühlung der Backwaren während dieses ersten Abkühlschrittes wird die zugeführte Aerosolmenge an die sinkende Temperatur angepasst, um eine Erhöhung des Wassersättigungsgrades zu vermeiden. Dies bedeutet, dass in aller Regel die Aerosolzufuhr in Abhängigkeit von der Kühlrate (Abkühlung pro Zeiteinheit) der Backwaren durch entsprechende Drosselung der Aerosolzufuhr anpasst wird. In aller Regel wird man den temperaturabhängigen Wassersättigungsgrad während dieser ersten Abkühlphase konstant halten. Durchaus sind diesbezüglich auch Variationen möglich, solange eine Wassersättigung von 98% nicht überschritten wird.

An diese erste Phase schließt sich eine zweite Phase der Aerosol-Behandlung an, die im Rahmen dieser Ausführungen auch als Restauskühlung angesprochen ist. In dieser zweiten Phase wird die Aerosol-Behandlung fortgesetzt, und zwar grundsätzlich zu denselben Bedingungen wie in der vorangegangenen ersten Aerosol-Behandlungsphase. Die zweite Abkühlphase unterscheidet sich von der ersten Abkühlphase dadurch, dass zur Bereitstellung des Überdruckes in der Backwarenumgebung keimfreie Luft zugeführt wird. Dieses erfolgt vor dem Hintergrund, dass diese zweite Phase bei Erreichen einer Abkühltemperatur der Oberfläche der Backwaren von 60°C oder um eine gewisse Sicherheit zu haben, bei 65°C oder etwas weniger beginnt, um eine mikrobielle Rekontamination bzw. ein Auskeimen von Sporen an der Oberfläche der Backwaren zu verhindern. Eine Zuführung von keimfreier Luft zum Aufbau des Überdruckes in der ersten Aerosol-Behandlungsphase ist nicht zwingend erforderlich, da in dieser Phase die Backwaren noch eine Temperatur aufweisen, dass mit diesen in Kontakt kommende Keime unverzüglich abgetötet werden. Selbstverständlich kann auch in der ersten Abkühlphase keimfreie Luft zum Bereitstellen des Überdruckes eingesetzt werden, um etwa dem herrschenden höheren Wasserdampfpartialdruck der Backware entgegen zu wirken. In aller Regel wird man dieses jedoch nicht vorsehen, da die Bereitstellung von keimfreier Luft einen zusätzlichen Aufwand durch die Entkeimung bedeutet. Hierfür werden besondere Filter und typischerweise UV-Entkeimungsstrecken benötigt. Insofern wird bei diesem zweistufigen Abkühlverfahren in geschickter Weise die in den Backwaren im Zuge der Abkühlung herrschende Temperatur genutzt, um ohne zwingende zusätzliche Maßnahmen Sorge dafür zu tragen, dass eine Rekontamination vermieden ist.

Die Aerosolzufuhr in dieser zweiten Aerosol-Behandlungsphase kann fortgesetzt werden, wie in der ersten Aerosol-Behandlungsphase, mithin zum Bereitstellen eines über beide Phasen konstanten Sättigungsgrades an Wasser in der Backwarenumgebung. In Abhängigkeit von der gewünschten Prozessführung kann die in der zweiten Aerosol-Behandlungsphase eingestellte Wassersättigung sich auch von derjenigen in der ersten Aerosol-Behandlungsphase unterscheiden.

Um eine Kontamination des Bereiches, in dem sich die Backwaren während der zweiten Aerosol-Behandlungsphase befinden, zu vermeiden, ist der durch die Luftzufuhr bereitgestellte Druck in diesem Bereich etwas höher als in dem Bereich, in dem sich die Backwaren für die Durchführung des ersten Aerosol-Behandlungsschrittes befinden. Dadurch ist sichergestellt, dass für den Fall, dass in dem ersten Aerosol-Behandlungsschritt keine keimfreie Luft zugeführt wird, diese nicht an die Backwaren gelangt, die bereits auf eine Temperatur unter 60°C abgekühlt sind. In einem Ausführungsbeispiel ist vorgesehen, dass die erste Aerosol-Behandlungsphase bei einem Überdruck von etwa 10 Pa gegenüber Umgebungsdruck und die zweite Aerosol-Behandlungsphase mit einem Überdruck von 10 Pa über dem Druck der ersten Aerosol-Behandlungsphase durchgeführt wird.

Das vorbeschriebene Verfahren eignet sich vor allem für ein Abkühlen von Backwaren, die in einem Durchlaufofen gebacken und somit kontinuierlich in die Abkühlstrecke eingebracht werden und diese ebenfalls kontinuierlich durchlaufen.

Von besonderem Vorteil ist bei diesem Verfahren, dass die Bereitstellung der Luftfeuchte und für die Zwecke der adiabatischen Kühlung kleinste Wassertröpfchen - ein Aerosol - verwendet wird. Dieses Aerosol kann, was in einer bevorzugten Ausgestaltung vorgesehen ist, nicht nur zur Bereitstellung bzw. auch Erhöhung der Feuchtigkeit innerhalb der Backwaren während der Abkühlphase dienen, sondern zugleich auch als Träger für bestimmte Stoffe verwendet werden, die den Backwaren zugeführt werden sollen. Eingesetzt werden können beispielsweise Stoffe, die eine antimikrobielle Wirkung haben. Eine Zuführung eines derartigen Stoffes mit dem Aerosol an die Backwaren verhindert wirksam ein mikrobielles Wachstum bzw. eine Rekontamination und kann das mittlere mikrobielle Haltbarkeitsdatum verlängern. Während der Aerosol-Behandlung in dem Temperaturbereich zwischen der oberen Aerosol-Behandlungstemperatur und der mittleren Aerosol-Behandlungstemperatur wird aufgrund der kleinen Tröpfchengröße und der hohen typischerweise Aerosol-Konzentration Aerosol bis in den Kern der Backware eindiffundieren. Dieses gilt auch, wenn das Aerosol als Träger für antimikrobielle Stoffe benutzt wird. Stoffe, die diese Funktionalität aufweisen, sind als Pflanzenextrakte (Naturstoffe) verfügbar. Typischerweise wird man solche Naturstoffe einsetzen, die mizelliert sind. Derartige Stoffe weisen eine sehr hohe Bioverfügbarkeit auf, womit bei einer vergleichsweisen niedrigen Dosis eine besonders hohe Wirksamkeit erreicht. Bei der Verfahrensausgestaltung, bei der mit dem Aerosol ein solcher antimikrobieller Zusatzstoff den Backwaren zugeführt wird, wird dieser typischerweise kontinuierlich während der Abkühlung dem Aerosol beigemengt. Durchaus möglich ist auch eine Verfahrensausgestaltung, bei der zwar kontinuierlich Aerosol den abzukühlenden Backwaren zugeführt wird, jedoch der antimikrobielle Stoff zum Vorbeugen bzw. Verhindern einer Rekontamination gepulst dem Aerosol beigemengt wird.

Von Vorteil bei diesem Verfahren ist bei einer Beimengung eines solchen mikrobiologischen Stoffes mit antimikrobieller Wirkung, dass durch die Aerosoltröpfchen als Träger dieses Stoffes nicht nur die Backwaren, sondern auch die Umgebung der Backwaren, in der diese dem Abkühlprozess unterworfen sind, gleichermaßen dekontaminiert wird. Entsprechend länger können die Intervalle zwischen zwei Reinigungsschritten zum Reinigen einer solchen Auskühlstrecke vorgesehen werden.

Bei diesem zweiphasigen Abkühlverfahren ist bevorzugt vorgesehen, in der ersten Abkühlphase mit dem Aerosol einen ersten anti-mikrobiologischen Stoff den Backwaren zuzuführen und in der zweiten Phase einen anderen antimikrobiell aktiven Naturstoff. Die Konzentration dieser antimikrobiellen Naturstoffe wird u.a. in Abhängigkeit von der Spezifität der Stoffe und dem gewünschten zu erzielenden Effekt eingesetzt. In aller Regel wird eine Konzentration von 0,1 % bis 1,0 % Bioadditiv im Aerosol als ausreichend angesehen.

In einer bevorzugten Verfahrensausgestaltung wird mit dem ersten Schritt der Aerosol-Behandlung begonnen, wenn die Backwaren eine Kerntemperatur von etwa 90°C bis 95°C erreicht haben. In der Verfahrensführung dieses Ausführungsbeispiels ist eine Toleranz von ± 2°C zugelassen. Die mittlere Aerosol-Oberflächen-Behandlungstemperatur wird bevorzugt bei 62°C ± 2°C angesetzt, woran sich dann die Phase der Restauskühlung anschließt. Die Phase der Restauskühlung endet mit der abschließenden Auskühlung der Backwaren, also mit derjenigen Temperatur, mit der die ab- bzw. ausgekühlten Backwaren einer Weiterbearbeitung, beispielsweise dem Schneiden und/oder einem Verpacken, zugeführt werden. Diese Temperatur ist auch im Rahmen dieser Ausführungen als untere Restauskühlungstemperatur angesprochen. In aller Regel dürfte es sich hierbei um die Umgebungstemperatur handeln. Da Backwaren jedoch auch bei etwas über den üblichen Umgebungstemperaturen liegenden Temperaturen geschnitten und verpackt werden können, beispielsweise bei 30 bis 35°C, kann die Restauskühlphase auch bereits bei Erreichen dieser Temperatur beendet werden. Entsprechend verkürzt ist das gesamte Abkühlverfahren.

Das Verfahren ist vorzugsweise in eine Prozesskette einer automatisierten Backanlage integriert. Hierbei kann es sich um eine Backanlage handeln, bei der die einzelnen Bearbeitungsstationen auf einer Ebene nebeneinander angeordnet sind. Besonders bevorzugt ist jedoch eine Verfahrensausgestaltung, bei der der Prozess des Abkühlens in einem Gegenstromverfahren durchgeführt wird. Dies bedeutet, dass die zu kühlenden Backwaren im Zuge des Durchführens des Abkühlverfahrens gegen die abgeführte Warmluft transportiert werden. Dieses bedeutet, dass die einzelnen Bearbeitungsstationen in unterschiedlichen Etagen bzw. Ebenen in einem Gebäude angeordnet sind. Der Ofen zum Backen der Backwaren befindet sich sodann auf einer oberen Ebene. Die aus dem Ofen entnommenen Backwaren werden zum Zwecke der Abkühlung und einer weiteren Verarbeitung der Backwaren sodann in eine darunter befindliche Etage oder Ebene gefördert. Vornehmen kann man dieses beispielsweise in einem Kühlturm, in dem die Backwaren beispielsweise über eine spiralförmig angelegte Förderstrecke transportiert werden. In einem oberen Abschnitt der Förderstrecke befindet sich der Aerosol-Behandlungsbereich für die erste Phase einer Aerosol-Behandlung, während in einem daran anschließenden, jedoch darunter befindlichen Bereich die Restauskühlung mit ihrer zweiten Phase der Aerosol-Behandlung vorgenommen wird. Die Strömung der Warmluft bzw. die entsprechend thermische Auftriebskraft steuert auch den Aerosoltransport, so dass die Aerosol-Behandlung in der ersten Phase der Abkühlung mit der gewünschten höheren Luftfeuchte die darunter befindliche Restauskühlung nicht beeinträchtigt. Aufgrund der sich einstellenden Konvektion innerhalb dieser Auskühlstrecke ist wirksam ein Eindringen von nicht keimfreier Luft, die in der ersten Aerosol-Behandlungsphase zugeführt wird, in den Bereich der zweiten Phase der Aerosol-Behandlung entgegengewirkt.

Von besonderem Vorteil des Verfahrens ist auch, dass bei einer solchen Auslegung Backwaren im Gegenstromprinzip in nur einem Kühlturm abgekühlt werden können.

Mit einer solchen adiabatischen Aerosolkühlung der Backwaren ist eine Verkürzung der Abkühlung am Beispiel eines Vollkornbrotes, die bereits vorstehend mit etwa 8 Stunden angegeben worden ist, auf 3 Stunden reduzierbar. Zugleich werden hygienische Risiken mit der Zugabe der antimikrobiellen Naturstoffe biologisch minimiert. Somit hat dieses Verfahren nicht nur Vorteile in dem zum Betreiben des Verfahrens notwendigen Energieeinsatz, sondern neben den weiteren, bereits vorgenannten Vorteilen vor allem auch in einer signifikanten Verkürzung der Abkühldauer, verglichen mit einem herkömmlichen Abkühlen ohne Einsatz aktiver Kälteerzeugung. Zusätzlich ist wirksam einem Masseverlust entgegengewirkt. Zudem kann das Mindesthaltbarkeitsdatum erhöht werden.

Überraschend hat sich zudem gezeigt, dass der Feuchtigkeitsverlust während der Lagerung einer verpackten Backware reduziert werden kann, wenn diese mit dem vorbeschriebenen Verfahren adiabatisch nach der Entnahme aus dem Ofen gekühlt worden ist. In einer Vergleichsuntersuchung wurden Brote gleichermaßen hergestellt und gebacken, jedoch unterschiedlich ab- bzw. ausgekühlt. Der Feuchtigkeitsgehalt eines der raumgekühlten Brote betrug am Produktionstag 46,09% und nach drei Wochen 40,98%. Die Brote, die hingegen der vorbeschriebenen adiabaten Kühlung unterworfen worden sind, wiesen eine Feuchte am Produktionstag von 47,61% und nach drei Wochen Lagerzeit noch eine Feuchte von 44,20% auf. Die Lagerung der Vergleichsbrote erfolgte unter identischen Bedingungen. Auch wenn der Feuchtigkeitsunterschied von 4% zwischen den beiden unterschiedlichen Broten betragsmäßig relativ gering erscheinen mag, ist dieser Feuchtigkeitsverlust, der mit einem Gewichtsverlust einhergeht, für einen Fachmann bereits in dieser Größenordnung sehr bedeutend. Der Masseverlust ist somit bei Anwendung dieses Verfahrens während der Lagerzeit erheblich reduziert.

Gelöst wird die vorstehend genannte Aufgabe ebenfalls durch eine Kühleinrichtung, bei der diese zwei in Förderrichtung der Backwaren aufeinander folgende Kühlstrecken, ausgestattet mit jeweils einer Luft- und Aerosolzuführung aufweist, wobei die Luft- und Aerosolzuführung in den beiden Kühlstrecken vorzugsweise unabhängig voneinander einstellbar und betreibbar sind.

Mit diesem Verfahren sowie mit der erfindungsgemäßen Kühleinrichtung erfolgt ein Abkühlen von Backwaren durch spezifisch adiabatische Kühlung, die einerseits die dynamisch sich ändernden Wasserdampfpartialdruckunterschiede zwischen Brotoberfläche und Raumluft während des Kühlprozesses minimiert (minimierter Masseverlust), die Wärmeleitfähigkeit des Brotes andererseits durch Aerosole erhöht (beschleunigte Kühlung) und schließlich mikrobiologisch-hygienische Besonderheiten spezifisch berücksichtigt (günstige/geringe Keimbelastung). Mit dem Gegenstand der Erfindung kann aufgrund der vorbeschriebenen Einflussparameter auf Änderungen in der Auskühlumgebung der Backwaren präzise und rasch reagiert werden.

Nachfolgend ist die Erfindung anhand von Ausführungsbeispielen unter Bezugnahme auf die Figuren beschrieben. Es zeigen:
- **Fig. 1:**: Ein Blockdiagram zur Erläuterung des erfindungsgemäßen Verfahrens und
- **Fig. 2:**: eine Kühleinrichtung zum Durchführen des zur Figur 1 beschriebenen Verfahrens gemäß einer weiteren Ausgestaltung.

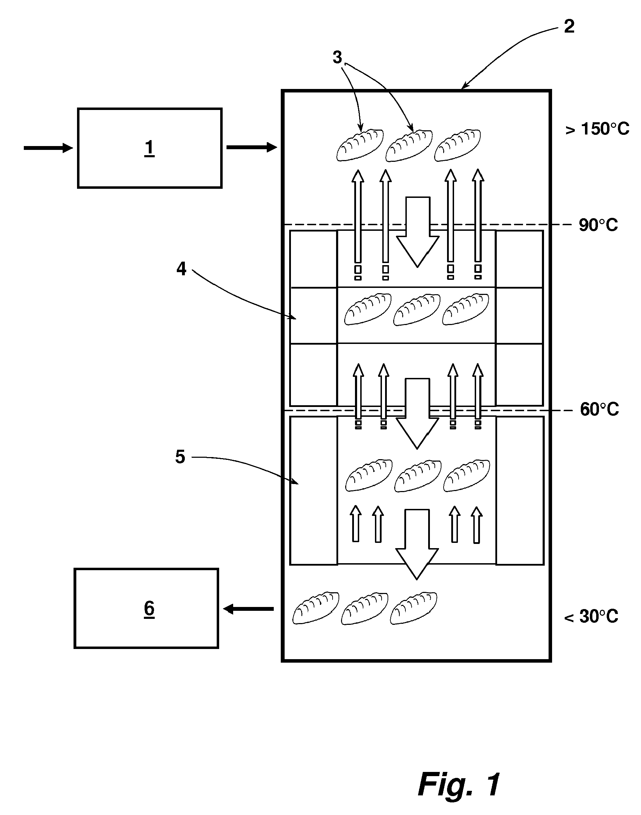

Die in einem Durchlaufofen 1 gebackenen Backlinge werden als Backwaren nach Beendigung des Backprozesses aus dem Ofen 1 entnommen. Dieses kann kontinuierlich oder aus diskontinuierlich erfolgen. Die aus dem Ofen 1 entnommenen Backwaren werden in eine Kühleinrichtung, die bei dem Ausführungsbeispiel der Figur 1 als Kühlturm 2 ausgeführt ist, eingebracht. In dem Kühlturm 2 werden die Backwaren, wie in Figur 1 durch die nach unten gerichteten Blockpfeile schematisch gezeigt, von oben nach unten gefördert. Dieses kann, wie in Figur 1 schematisiert in vertikaler Richtung erfolgen oder auch über eine Spirale oder eine andere Förderstrecke, mit der die Backwaren von einer oberen Ebene in eine untere Ebene gefördert werden. Typischerweise werden die Backwaren über eine Förderspirale in der genannten Richtung gefördert, und zwar mit einem Gefälle zwischen 7 % und 10 %. Die Einrichtung eines Gefälles von 8 % hat sich bewehrt.

Die schematisiert als Brote 3 in der Figur dargestellte Backware, die bei einer Ofentemperatur von mehr als 160°C gebacken worden sind, strahlen Wärme ab. Mithin entsteht in dem Kühlturm 2 bereits hierdurch, wie durch die nach oben gerichteten Blockpfeile angedeutet, ein Aufwind. Wenn die Brote 3 über eine gewisse Strecke in dem Kühlturm 2 entgegen dieser Strömungsrichtung gefördert worden sind, gelangen diese in eine Temperaturzone, in der mit einer Aerosol-Behandlung begonnen wird. Die obere Aerosol-Behandlungstemperatur beginnt bei dem dargestellten Ausführungsbeispiel bei 90°C - 95°C Kerntemperatur der Backware. Die obere Aerosol-Behandlungstemperatur liegt in jedem Fall unter 100°C. Ab dieser Höhe im Kühlturm 2 befindet sich eine Luft- und Aerosolzuführung 4, durch die Aerosol, luftgestützt getragen, mit einer Temperatur von etwa 25°C in den Kühlturm 2 zum Beaufschlagen der abzukühlenden Brote 3 eingebracht wird. Die Luft- und Aerosolzuführung erfolgt umfänglich in dieser Kühlstrecke des Kühlturms 2. Die luftgestützte Zuführung des Aerosols bedingt die Ausbildung eines gewissen Überdruckes im Bereich der Luft- und Aerosolzuführung 4 und somit in demjenigen Bereich, in dem sich die abzukühlenden Backwaren befinden. Der erzeugte Überdruck beträgt bei dem dargestellten Ausführungsbeispiel etwa 10 Pa. Dem aufsteigenden, durch Konvektion begründeten Warmluftstrom folgend, strömt die Luft auch in Folge des eingestellten Überdruck nach oben ab. Die Zuführung des Aerosols in diesem Abschnitt des Kühlturms 2 ist an die sich in diesem Abschnitt reduzierende Temperatur der Brote 3 angepasst. Die Brote 3 werden kontinuierlich durch diese Zone der Luft- und Aerosolzuführung 4 gefördert. Zu diesem Zweck ist die Aerosolzuführung 4 bei dem dargestellten Ausführungsbeispiel durch drei Aerosolzuführungssegmente realisiert, wobei die Zuführmenge des Aerosols von dem obersten Aerosolzuführungssegment zu dem untersten Aerosolzuführungssegment in diesem Abschnitt des Kühlturmes 2 hin abnimmt. Die Aerosolzuführmenge ist so eingerichtet, dass die Brote 3 bei dem Prozess ihrer Förderung durch diesen Abschnitt keinen Gewichtsverlust erleiden, vielmehr eine gewisse Gewichtszunahme erfahren. Bei dem dargestellten Ausführungsbeispiel wird die Aerosolzuführmenge so eingestellt, dass die Wassersättigung im Bereich der Brote 3 in etwa gleich bleibt, beispielsweise bei etwa 80% relativer Feuchte. Bei dem dargestellten Ausführungsbeispiel ist die mittlere Aerosol-Behandlungstemperatur bei der die erste Aerosol- Behandlungsphase endet, erreicht, wenn die Brote 3 auf eine Oberflächentemperatur der Backware von 62°C abgekühlt sind. Somit endet die Aerosol-Behandlungsphase innerhalb des Kühlturms 2 in einer Höhe, in der die Brote 3 nur noch eine Oberflächentemperatur von 62°C aufweisen. Bei diesem Ausführungsbeispiel wird als mittlere Produkt-Oberflächen-Behandlungstemperatur eine Temperatur von 62°C vorgesehen, um einen Sicherheitsfaktor zu haben, da bei einer Temperatur unter 60°C eine mikrobielle Rekontamination der Brote 3 möglich ist.

Um eine Rekontamination der Brote 3 zu verhindern, wird in der sich anschließenden zweiten Aerosol-Behandlungsphase keimfreie Luft zugeführt. Hierzu dient eine in dem Kühlturm 2 in einer zweiten, sich an die erste Kühlstrecke anschließenden Kühlstrecke angeordnete Luft- und Aerosolzuführung mittels einer entsprechenden Einrichtung 5 auch in dieser Kühlstrecke wird das luftgetragene Aerosol umfänglich im Bezug auf die Kühlstrecke eingebracht. Während die Aerosolzuführung in dem Aerosol-Behandlungsbereich der ersten Kühlstrecke während der ersten Phase einer Aerosol-Behandlung so eingerichtet ist, dass das Aerosol bis in den Kern der Brote 3 eindiffundieren kann, wird die Aerosolzuführung in dem Restauskühlbereich und somit während der zweiten Aerosol-Behandlungsphase vornehmlich auf die Oberfläche der Brote einwirken. Die mit dem Aerosol in dieser Phase zugeführten biologischen Additive sind ebenfalls ausgelegt, einer Rekontamination vorzubeugen, bzw. zu vermeiden. In dieser zweiten Aerosol-Behandlungsphase wird das Aerosol mit keimfreier Luft in die Kühlstrecke eingebracht. Der durch die Luft- und Aerosolzuführung in dieser zweiten Kühlstrecke eingestellte Druck liegt um etwa 10 Pa höher als der in der ersten Kühlstrecke eingestellt Druck. Durch diese Maßnahme ist wirksam ein Zustrom von Luft aus der ersten Kühlstrecke in die zweite Kühlstrecke verhindert. Ebenso ist verhindert, dass durch einen Ausgang, durch den die restausgekühlten Backwaren aus dem Kühlturm 2 herausgebracht werden, durch diesen nicht keimfreie Umgebungsluft in den Kühlturm 2 eindringt.

Diese Restauskühlphase endet, wenn die ab- und ausgekühlten Backwaren die Umgebungstemperatur oder eine hinreichende Abkühlung erfahren haben, um einer weiteren Bearbeitung zugeführt werden zu können. Bei dem dargestellten Ausführungsbeispiel werden die Brote 3 einer Schneidemaschine 6 als weiteren Bearbeitungsschritt nach dem Kühlturm 2 zugeführt und dort geschnitten, bevor diese verpackt werden.

Bei dem dargestellten Ausführungsbeispiel ist als weiterverarbeitende Station beispielhaft eine Station mit einer Schneidemaschine beschrieben worden. An dieser Stelle können auch andere Weiterverarbeitungsstationen vorgesehen sein, beispielsweise eine Verpackungsstation, eine kombinierte Schneide- und Verpackungsstation oder auch eine weitere Kühlstrecke, die mit einer aktiven Kühlung betrieben wird, um die Backwaren auf eine unter Raumtemperatur befindliche Temperatur abzukühlen, beispielsweise eine Oberflächentemperatur derselben von etwa +20°C +/- 5°C oder auch weniger. Hierdurch können l ängere mittlere Haltbarkeitsdaten generiert werden. Unterstützt werden kann eine solche Maßnahme durch Verpacken der Backwaren unter Schutzgasatmosphäre. Diese weitere aktive Kühlung kann von einer sanften Aerosolbehandlung begleitet werden. Die vorbeschriebene adiabatische Kühlung kann gleichfalls als Vorstufe zum Tiefgefrieren eingesetzt werden.

Bei der in Figur 1 vorgestellten Ausgestaltung wird der in der zweiten Auskühlphase generierte Aufwind als Eingang in die erste Aerosolbehandlungsphase genutzt. Eine solche Ausgestaltung kann zur Kostenreduzierung eingesetzt werden, da dann entsprechend weniger Luft und Aerosol bereitgestellt werden muss. Dies bedeutet nicht, dass eine Aerosolbehandlung in beiden Phasen mit der selben Luft- und/oder Aerosolmenge vorgenommen werden muss. Da typischerweise in der ersten Phase mehr Aerosol zugeführt wird als in der zweiten Aerosolbehandlungsphase, wird zusätzliches Aerosol in die erste Auskühlstrecke eingebracht. Entsprechend kann mit der jeweils gewünschten Luftmenge umgegangen werden. Wird bei einer solchen Ausgestaltung in der zweiten Aerosol-Behandlungsphase mehr Luft benötigt als in der ersten Aerosol-Behandlungsphase, wird ein Teilluftstrom der zweiten Auskühlstrecke nicht in die erste Auskühlstrecke eingespeist.

Backwaren, die mit dem vorbeschriebenen Abkühlverfahren nach ihrer Entnahme aus einem Backofen abgekühlt worden sind, zeigen vergleichsweise günstige Schneideeigenschaften, da durch eine adiabate Kühlung die Krusteneigenschaften weniger splittrig -spröde Materialeigenschaften aufweisen, so dass u.a. weniger Schneidereste anfallen und/oder harte, spitze Krustenbestandteile weniger bis gar nicht anfallen, was eine physikalische Verletzung der Verpackung minimiert bzw. vermeidet.

Wenn im Rahmen dieser Ausführungen der Begriff "keimfrei" im Bezug auf die Luftzufuhr verwendet wird, schließt dieses ebenfalls Luft ein, die noch einen gewissen Maximalgehalt an Keimen aufweisen kann.

Das eingebrachte Aerosol in dem Aerosol-Behandlungsbereich des Kühlturms 2 führt zu einer besonders wirksamen adiabatischen Kühlung der Brote. Das zugeführte Aerosol ist bei dem dargestellten Ausführungsbeispiel mit einem antimikrobiellen Naturstoff beladen, wodurch eine Rekontamination der Brote 3 verhindert wird.

Das Ausführungsbeispiel der Figur 1 zeigt einen Kühlturm, bei dem sich der Ofen in einer oberen Ebene eines Gebäudes und die weiterverarbeitenden Stationen, wie beispielsweise das Schneiden, Verpacken und dergleichen in einer unteren Ebene befinden. Über die Kühleinrichtung wird die Höhendifferenz zwischen dem Ofen und den weiterverarbeitenden Stationen überwunden. Bei einem Einsatz von Förderbändern, die für den Transport von Backwaren typischerweise eingesetzt werden, ist in einer besonderen Ausgestaltung der Kühleinrichtung vorgesehen, das beispielsweise im Falle einer Auslegung der Kühleinrichtung, wie durch den Kühlturm 2 der Figur 1 dargestellt, die Fördereinrichtung zwei Förderer umfasst, wobei ein erster Förderer zum Transport der Backwaren bis zum Ende der ersten Kühlstrecke und ein zweiter Förderer zum Transport der Backwaren vom Beginn der zweiten Kühlstrecke bis zum Ausgang des Kühlturms 2 vorgesehen sind. Zwischen den beiden Förderern ist eine Übergabe der transportierten Backwaren von dem ersten Förderer auf den zweiten Förderer vorgesehen. Bei einer solchen Ausgestaltung ist vermieden, dass das zurückgeführte Förderband mit relativ kühler Temperatur in die erste, relativ warme Kühlstrecke eingebracht wird, in der an diesem Bandabschnitt aufgrund seiner relativ kühlen Temperatur sich Kondensat bilden könnte.

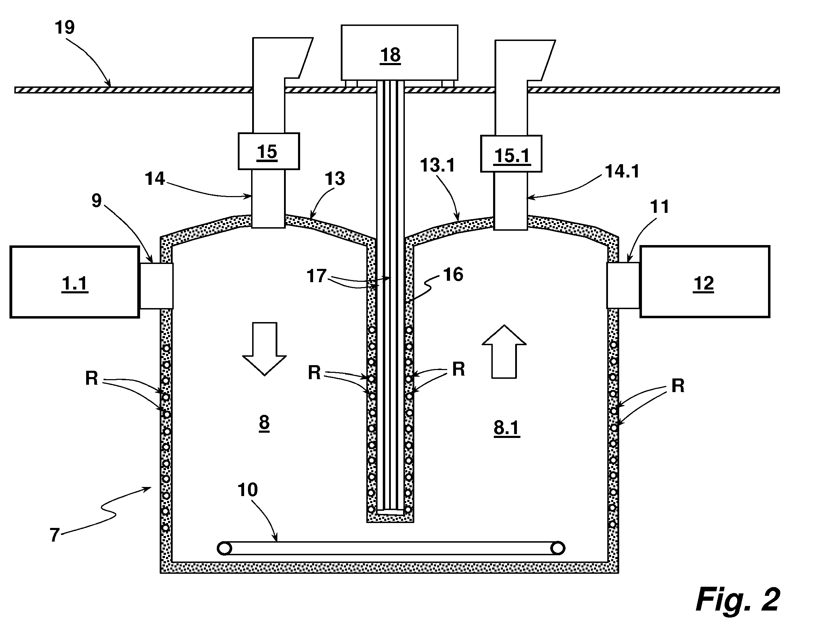

Figur 2 zeigt eine Kühleinrichtung, die prinzipiell aufgebaut ist, wie der Kühlturm 2 des Ausführungsbeispiels der Figur 1. Bei der Ausgestaltung gemäß Figur 2 ist die Kühleinrichtung als Tandem-Kühlturm 7 ausgeführt. In jedem Kühlturm 8, 8.1 des Tandem-Kühlturms 7 befindet sich eine Kühlstrecke. Der Kühlturm 8 ist an den Ausgang eines Ofens 1.1 angeschlossen. Durch eine Schleuse 9 werden die gebackenen Backwaren aus dem Durchlaufofen 1.1 in den Kühlturm 8 der Kühleinrichtung eingebracht und in diesem über einen Spiralförderer, wie durch den Blockpfeil angedeutet, auf ein tieferes Niveau transportiert. Im Bereich des unteren Abschlusses ist eine Unterflurverbindung zwischen dem ersten Kühlturm 8 und dem zweiten Kühlturm 8.1 vorgesehen. In dieser Verbindung ist ein Umsetzförderer 10 angeordnet, mit dem nach Passieren der ersten Kühlstrecke die Backwaren von dem Kühlturm 8 in den Kühlturm 8.1 transportiert werden. In dem Kühlturm 8.1 befindet sich ebenfalls ein Spiralförderer, mit dem die Backwaren wieder auf das Ausgangsniveau transportiert werden, in welchem Niveau diese wiederum durch eine Schleuse 11 den Kühlturm 8.1 verlassen und beispielsweise einer Schneid- und Verpackungsstation 12 als beispielhafte Weiterverarbeitungsstationen zugeführt werden. Die Ausgestaltung der Kühleinrichtung als Tandem-Kühlturm 7 hat zum Vorteil, dass insgesamt nur eine geringere Höhe zu überwinden ist, sodass die notwendige Bauhöhe gegenüber einer Ausgestaltung des Kühlturms gemäß Figur 1 deutlich reduziert ist.

Die beiden Kühltürme sind in nicht näher dargestellter Art und Weise gegenüber der äußeren Umgebung isoliert. Die die jeweiligen Kühlstrecken einfassenden Wände sind mit einer Wandheizung ausgerüstet, deren Rohre in der Figur mit den Bezugszeichen R kenntlich gemacht sind. Über diese können die jeweiligen Kühlstrecken temperiert werden. So ist es beispielsweise mit einer solchen Wandheizung möglich, die Kühleinrichtung auf Betriebstemperatur zu bringen, bevor in dieser Backwaren abgekühlt werden. Eine solche Vorerwärmung dient zur Reduzierung der Gefahr einer Kondensatbildung an den ansonsten unter Umständen noch kühlen Wänden. Es versteht sich, dass die Kühltürme 8, 8.1 auf ein unterschiedliches Temperaturniveau vorerwärmt werden können. Von Vorteil bei einer solchen Ausgestaltung ist zudem, dass eine Reinigung der Kühltürme 8, 8.1 vereinfacht ist, da nach einer Reinigung die Kühltürme durch Betreiben der Wandheizung ohne weiteres getrocknet werden können. Zum Zwecke einer Reinigung befindet sich in jedem Kühlturm im Bereich des Bodens vorzugsweise ein Ablauf zum Auffangen der Reinigungsflüssigkeit (nicht dargestellt).

Die beiden Kühltürme 8, 8.1 können neben oder auch anstelle einer Wandheizung ebenfalls über eine Bodenheizung verfügen.

Auch wenn bei dem zu Figur 1 schematisiert dargestellten Ausführungsbeispiel innerhalb des Kühlturms 2 die Luft- und Aerosolzuführungen 4, 5 angeordnet sind, befinden sich diese tatsächlich außerhalb der jeweiligen Kühlstrecke. So ist dieses auch bei dem Ausführungsbeispiel der Figur 2 der Fall. Die Luft- und Aerosolzuführung erfolgt durch in die Wände und durch in den Boden eingebrachte Luft- und Aerosolzuführöffnungen. Diese sind rasterförmig vorgesehen, um eine über die Querschnittsfläche der jeweiligen Kühlstrecke möglichst homogene Aerosolzuführung zu erreichen. Ebenso wie bei dem Ausführungsbeispiel der Figur 1 ist die Luft- und Aerosolzuführung in dem für die erste Aerosol-Behandlung verantwortlichen Kühlturm 8 ausgelegt, damit in vertikaler Richtung und somit in Abkühlrichtung, eine Anpassung der zugeführten Aerosolmenge an die kühler werdenden Backwaren möglich ist.

Bei dem Kühlturm 8 wird durch die Luft- und Aerosolzuführung ein Überdruck von etwa 10 Pa gegenüber Umgebungsdruck eingestellt. In dem Dach 13 des Kühlturms 8 mündet eine Absaugleitung 14, die unter Zwischenschaltung eines Abluftventilators die Abluft aus dem Kühlturm 8 abzieht und außerhalb des Gebäudes, in dem die Kühleinrichtung angeordnet ist, der Umgebung zuführt.

Der Kühlturm 8.1 ist prinzipiell gleich aufgebaut wie der Kühlturm 8. Unter Zwischenschaltung eines Ventilators 15.1 wird auch bei diesem über eine in dem Dach 13.1 des Kühlturms 8.1 mündende Absaugleitung 14.1 die Abluft abgezogen und an die Umgebung abgegeben.

Ein zwischen den beiden kreisförmigen Kühltürmen 8, 8.1 befindlicher Zwischenraum 16 dient zur Aufnahme der für die Luft- und Aerosolzuführung benötigten Rohrleitungen. Die notwendigen Pumpen, Aerosolerzeuger und dergleichen befinden sich in einer Einheit 18 auf dem Dach 19 des im übrigen nicht näher dargestellten Gebäudes, in dem die als Tandem-Kühlturm 7 ausgeführte Kühleinrichtung untergebracht ist.

Die Fördereinrichtung, über die die gebackenen Backwaren durch den Tandem-Kühlturm 7 gefördert werden, umfasst, wie vorstehend bereits aufgezeigt, drei Förderer, zu denen auch der Umsetzförderer 10 zählt. Die Förderer können mit unterschiedlicher Geschwindigkeit betrieben werden. Dieses ermöglicht eine Betriebsweise dieser Kühleinrichtung, bei der der Umsetzförderer 10 mit einer etwas höheren Fördergeschwindigkeit betrieben wird als der Förderer zum Transportieren der Backwaren durch den Kühlturm 8 und zudem der in dem Kühlturm 8.1 befindliche Förderer wiederum etwas schneller betrieben wird als der Umsetzförderer 10. Die Folge ist, dass sich infolge des Umsetzens der Backwaren auf den Umsetzförderer 10 und von diesem auf den Förderer im Kühlturm 8.1 der Abstand der Backwaren, die typischerweise in Reihen nebeneinanderliegend auf einem Förderer liegen, in Förderrichtung vergrößert wird. Während die Backwaren mit relativ geringem Abstand zueinander in Förderrichtung aus dem Ofen 1.1 in den Kühlturm 8 eingebracht werden, unterstützt ein im Kühlturm 8.1 dann größerer Abstand ein rascheres Restauskühlen, wodurch wiederum die Gefahr einer Rekontamination reduziert wird. Zudem kann in der zweiten, in dem Kühlturm 8.1 durchgeführten Auskühlphase ein sanftes Auskühlen der Backwaren durch einen erhöhten Luftzustrom vorgenommen werden.

Von Vorteil des Einsatzes eines Tandem-Kühlturmes 7, bei dem auch in dem für die zweite Kühlstrecke verantwortlichen Kühlturm 8 infolge der Luftzufuhr ein höherer Druck herrscht als in dem Kühlturm 8, ist eine thermische und hygienische Trennung der beiden Kühltürme 8, 8.1. Zudem ist es möglich, die Luftführung in den beiden Phasen der Aerosol-Behandlung unterschiedlich durchzuführen, und vor allem ohne dass sich diese gegenseitig beeinflussen. So ist es beispielsweise bei Einsatz einer als Tandem-Kühlturm 7 ausgelegten Kühleinrichtung möglich, in der zweiten Phase der Aerosol-Behandlung, die in dem Kühlturm 8.1 durchgeführt wird, die Luftzufuhr sanft auszugestalten und somit die Restauskühlphase diesbezüglich zu steuern. Erreichen lässt sich dies durch Zufuhr einer anderen Luftmenge als in dem Kühlturm 8.

Zur weiteren Verbesserung einer thermischen bzw. hygienischen Trennung zwischen der Kühlstrecke in dem Kühlturm und derjenigen in dem Kühlturm 8.1 kann in der Unterflurverbindung zwischen den beiden Kühltürmen 8, 8.1 eine Abluftleitung münden, die unter Zwischenschaltung eines Ventilators Abluft aus dieser Verbindung abzieht (nicht dargestellt).

Die Erfindung ist anhand von Ausführungsbeispielen beschrieben worden. Ohne den Umfang der geltenden Ansprüche zu verlassen, ergeben sich für einen Fachmann zahlreiche weitere Ausgestaltungen, die Erfindung verwirklichen zu können. So ist es beispielsweise möglich, einen Tandem-Kühlturm auch in einer solchen Ausgestaltung einzusetzen, bei dem die aus dem Ofen kommenden Backwaren in dem ersten Kühlturm nach oben transportiert werden und somit im Gleichstrom zu dem in diesem Kühlturm herrschenden Luft- und Aerosolstrom, während die Backwaren in der zweiten Aerosol-Behandlungsphase im zweiten Kühlturm eines solchermaßen konzipierten Tandem-Kühlturms nach unten im Gegenstrom transportiert werden. Ebenso gut kann die Auskühlstrecke auch horizontal verlaufend konzipiert sein, wobei der durch einen solchen horizontal ausgelegten Kühltunnel transportierte Luftstrom in Bezug auf die Förderrichtung der Backwaren als Gegenstrom konzipiert ist.

### Bezugszeichenliste

- 1, 1.1: Durchlaufofen
- 2: Kühlturm
- 3: Brot
- 4: Luft- und Aerosolzuführung
- 5: Luft- und Aerosolzuführung
- 6: Schneidemaschine
- 7: Tandem-Kühlturm
- 8,8.1: Kühlturm
- 9: Schleuse
- 10: Umsetzförderer
- 11: Schleuse
- 12: Schneid- und Verpackungsstation
- 13: Dach
- 14, 14.1: Absaugleitung
- 15, 15.1: Ventilator
- 16: Zwischenraum
- 17: Rohrleitungen
- 18: Einheit
- 19: Gebäudedach
- R: Heizungsrohr

## Patentansprüche

1. Verfahren zum Abkühlen von Backwaren nach deren Entnahme aus einem Ofen (1, 1.1) auf eine Weiterverarbeitungstemperatur, umfassend folgende Schritte:
- Auskühlen der Backwaren (3) auf eine obere Aerosol-Behandlungstemperatur mit einer Oberflächentemperatur zwischen 80°C und weniger als 100°C, an welches erste Auskühlen der Backwaren (3) sich eine zweistufige Aerosol-Behandlung der Backwaren (3) anschließt,
- wobei die erste Phase der Aerosol-Behandlung bei Erreichen der oberen Aerosol-Behandlungstemperatur beginnt, wenn sich die Backwaren (3) in einem Bereich, in dem gegenüber der Umgebung durch Luftzufuhr ein Überdruck herrscht, befinden, in welcher Phase die Backwaren (3) einem zugeführten wasserbasierten oder wässrigen und gegenüber den Backwaren (3) kühleren Aerosol ausgesetzt werden, wodurch diese adiabatisch abgekühlt werden, wobei eine Wassersättigung durch das Aerosol in der Backwarenumgebung von weniger als 100% eingestellt wird und diese Aerosol-Behandlung bis zum Erreichen einer mittleren Aerosol-Behandlungstemperatur von weniger als 70°C und mehr als 50°C fortgesetzt wird , und
- bei Erreichen der mittleren Aerosolbehandlungstemperatur: Übergang in die zweite Phase der Aerosol-Behandlung bei fortgesetzter Aerosolzuführung, jedoch in einer durch Luftzufuhr bereitgestellten Umgebung mit einem gegenüber dem in der vorangegangenen Phase höheren Druck, wobei in dieser zweiten Abkühlphase ab einer Oberflächentemperatur der Backwaren (3) von 65°C oder weniger keimfreie Luft zum Aufbau des Überdruckes zugeführt wird, und die Backwaren (3) in dieser zweiten Phase bis zum Erreichen einer unteren Restauskühlungstemperatur ausgekühlt werden.

2. Verfahren nach Anspruch 1, **dadurch gekennzeichnet, dass** die obere Aerosol-Behandlungstemperatur, bei der die Aerosolbehandlung beginnt, zwischen 90°C und 95°C liegt.

3. Verfahren nach Anspruch 1 oder 2, **dadurch gekennzeichnet, dass** die mittlere Aerosol-Behandlungstemperatur, bei der die Aerosolbehandlung mit hoher Luftfeuchtigkeit beendet wird, bei 62°C ± 2°C liegt.

4. Verfahren nach einem der Ansprüche 1 bis 3, **dadurch gekennzeichnet, dass** die Restauskühlung bei einer unteren Restauskühlungstemperatur beendet wird, bei der ein nachfolgender Bearbeitungsschritt, beispielsweise das Schneiden der Backwaren, durchgeführt werden kann.

5. Verfahren nach einem der Ansprüche 1 bis 4, **dadurch gekennzeichnet, dass** in dem zweiten Aerosol-Behandlungsschritt keimfreie Luft zum Aufbau des Überdruckes in die Backwarenumgebung eingebracht wird.

6. Verfahren nach einem der Ansprüche 1 bis 5, **dadurch gekennzeichnet, dass** zum Zuführen für die Aerosol-Behandlung ein Aerosol erzeugt wird, dessen Tröpfchen einen Durchmesser von weniger als 0,004 mm aufweisen.

7. Verfahren nach einem der Ansprüche 1 bis 7, **dadurch gekennzeichnet, dass** in dem Schritt der Aerosolbehandlung sowie in dem Schritt der Restauskühlung mit dem Aerosol antimikrobielle und/oder antifungale Stoffe den Backwaren (3) zugeführt werden.

8. Verfahren nach einem der Ansprüche 1 bis 7, **dadurch gekennzeichnet, dass** das Verfahren in die Prozesskette einer automatisierten Backanlage integriert ist, in welcher Prozesskette Bearbeitungsstationen (1, 6) in zumindest zwei Etagen vorgesehen sind und die Backwaren (3) während des Abkühlens entgegen den durch den Auskühlvorgang ausgebildeten Wärmestrom gefördert werden, wobei das Abkühlen der Backwaren (3) in einem Kühlturm (2) erfolgt, in dem diese von einer oberen Etage, in dem der Ofen (1) zum Backen der Backwaren angeordnet ist, in eine darunter liegende Etage, in der die ausgekühlten Backwaren weiterverarbeitet werden, gefördert werden.

9. Kühleinrichtung zum Abkühlen von Backwaren nach deren Entnahme aus einem Ofen auf eine Weiterverarbeitungstemperatur, insbesondere zum Durchführen des Verfahrens nach einem der Ansprüche 1 bis 8, **dadurch gekennzeichnet, dass** die Kühleinrichtung zwei in Förderrichtung der Backwaren (3) aufeinanderfolgende Kühlstrecken, ausgestaltet mit jeweils einer Luft- und Aerosolzuführung aufweist.

10. Kühleinrichtung nach Anspruch 9, **dadurch gekennzeichnet, dass** die Fördereinrichtung der Backwaren (3) durch die erste Kühlstrecke und/oder durch die zweite Kühlstrecke entgegen der sich daran bei einem Betrieb der Kühleinrichtung einstellende Luftströmungsrichtung vorgesehen ist.

11. Kühleinrichtung nach Anspruch 10, **dadurch gekennzeichnet, dass** die Kühleinrichtung als Kühlturm (2) mit einer Fördereinrichtung zum Transportieren der Backwaren (3) von einem höheren Niveau in ein darunterliegendes Niveau ausgeführt ist und sich die Zuführung der abzukühlenden Backwaren (3) in dem oberen Niveau und die Weitergabe der abgekühlten Backwaren an eine nachgeschaltete Station (6) in dem tieferen Niveau befinden.

12. Kühleinrichtung nach Anspruch 9 oder 10, **dadurch gekennzeichnet, dass** die Kühleinrichtung als Tandem-Kühlturm (7) ausgelegt ist, wobei in einem ersten Kühlturm (8) die Luft- und Aerosolzuführung für eine erste Aerosol-Behandlung und in dem zweiten Kühlturm (8.1) die Luft- und Aerosolzuführung für eine zweite Aerosol-Behandlung ausgelegt sind.

13. Kühleinrichtung nach Anspruch 16, **dadurch gekennzeichnet, dass** der erste Kühlturm (8) ausgelegt ist, damit die Aerosol-Behandlung der Backwaren (3) im Gegenstrom zu dem darin herrschenden Luft- und Aerosolstrom durchführbar ist und dass der zweite Kühlturm (8.1) ausgelegt ist, damit die Aerosol-Behandlung der Backwaren (3) im Gleichstrom zu dem darin herrschenden Luft- und Aerosolstrom durchführbar ist.

14. Kühleinrichtung nach einem der Ansprüche 9 bis 13, **dadurch gekennzeichnet, dass** die die Kühlstrecke einfassenden Wände zumindest bereichsweise mit einer Wand- und/oder Bodenheizung ausgestattet sind.
